(19) **Europäisches Patentamt** / **European Patent Office** / **Office européen des brevets**

(11) **EP 3 029 416 B1**

(12) **EUROPEAN PATENT SPECIFICATION**

(45) Date of publication and mention of the grant of the patent:
**17.06.2020 Bulletin 2020/25**

(51) Int Cl.:
***G01B 11/27*** *(2006.01)*

(21) Application number: **15196471.5**

(22) Date of filing: **26.11.2015**

(54) **METHOD FOR DETERMINATION OF SINKING AND/OR THE PROCESS OF SINKING AND/OR DETERMINATION OF THE INCLINATION ANGLE AND/OR THE PROCESS OF THE BENDING OF A HORIZONTAL OR INCLINED SPINDLE, PARTICULARLY OF A HORIZONTAL OR INCLINED SPINDLE OF A MACHINE TOOL AND A DETECTION DEVICE FOR PERFORMING IT**

VERFAHREN ZUR BESTIMMUNG EINER ABSENKUNG UND/ODER EINES ABSENKUNGSVERFAHRENS UND/ODER ZUR BESTIMMUNG DES NEIGUNGSWINKELS UND/ODER DER DURCHBIEGUNG EINER HORIZONTALEN ODER GENEIGTEN SPINDEL, INSBESONDERE EINER HORIZONTALEN ODER GENEIGTEN SPINDEL EINER WERKZEUGMASCHINE UND ERKENNUNGSVORRICHTUNG ZUR DURCHFÜHRUNG DES VERFAHRENS

PROCÉDÉ DE DÉTERMINATION DE CREUSAGE ET/OU PROCESSUS D'ENFONCEMENT ET/OU DÉTERMINATION DE L'ANGLE D'INCLINAISON ET/OU PROCÉDÉ DE FLEXION D'UN AXE HORIZONTAL OU INCLINÉ, EN PARTICULIER D'UN AXE HORIZONTAL OU INCLINÉ D'UNE MACHINE-OUTIL ET DISPOSITIF DE DÉTECTION POUR SON EXÉCUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2014 CZ 20140854**

(43) Date of publication of application:
**08.06.2016 Bulletin 2016/23**

(73) Proprietor: **VÚTS, a.s.**
**Liberec XI - Ruzodol I**
**460 01 Liberec (CZ)**

(72) Inventors:
• **SIDLOF, Pavel**
**460 14 Liberec 14 (CZ)**
• **SKOP, Petr**
**460 01 Liberec (CZ)**

(74) Representative: **Musil, Dobroslav**
**Zabrdovicka 801/11**
**615 00 Brno (CZ)**

(56) References cited:
**DE-A1- 19 907 880     US-A- 6 049 378**
**US-A1- 2003 016 367     US-A1- 2005 193 806**
**US-B1- 6 342 946**

## Description

## Technical field

The invention relates to a method for determination of deflection aor the process of deflection of a horizontal or angular spindle, especially a horizontal or angular spindle of a machine tool.

## Background art

During extension of a horizontal or angular spindle out of a headstock, especially in machine tools, e.g., in boring and milling machines, the spindle sinks due to the effect of gravity force - i.e. the bending of the spindle and change of deformation of its mounting occurs. That results in dropping the spindle end with a tool clamped to it below its original axis, due to which inaccuracies occur during the machining process. These inaccuracies are significant especially in the case of precision products or products which are manufactured by machining when a tool moves over great distances during machining. So as to eliminate these inaccuracies, headstocks of machine tools are slightly tilted upwards in a vertical plane, i.e. against the action of gravity, and so subsequently, during extension of the spindle, the spindle end at first rises in relation to its original axis, whereby after achieving a certain defined extension, it drops again due to the bending caused by the gravity force, and, possibly, also due to other deformations of other parts of the machine tool. In order to set the tilting of the headstock appropriately and to control it as well as make possible corrections, it is necessary to know the process of deflection of a particular spindle in its movement. At present, the process of deflection is usually measured with respect to a clamping table of a particular machine tool. However, during that process errors occur, caused by the inaccurate position of the original axis of the spindle with respect to the clamping table, as well as by inaccuracies of the clamping table or its shifting and by a number of other influences. Another disadvantage is also the fact that the process of deflection of a particular spindle in its movement cannot be measured by these methods until the headstock is installed on a particular machine tool and until it is adjusted, and, thus, it cannot be measured, e.g., on test benches or during the installation of the headstock.

For the measurement of spindle rotation errors of a machine tool, including its deflection, a method was proposed in CN 102322795, in which the spindle is fitted with a flange with a conic reflective face at which four laser beams are directed during the measurement. At the same time, reflections of these laser beams from the conic face of the flange are projected onto CCD sensors and the spindle rotation errors are deduced from the displacement of these reflections on CCD sensors. However, the disadvantages of this method include above all the necessity to rearrange the sources of the laser beams or CCD sensors in the case of a change in the extension of the spindle, a requirement for very high accuracy and smoothness of surface of the reflective face, which increases the buying costs of the flange, a complicated measurement equipment and method of evaluation and the fact that deflection of one or more reflected laser beams, which is subsequently evaluated as a rotation error, may be caused even by very small impurities which were captured on the flange face before and/or during the measurement, as well as the fact that the flange itself puts a strain on the spindle, thereby distorting the measurement results, or the monitoring of the process of its deflection.

From DE19907880 is known a method for determination of mutual azimuth and elevation of two spindles of two machines, where one of the spindles is equipped with a mirror or a retro-reflector, whereas the second one is equipped with a device for emitting and at the same time receiving a light beam. This device (for example a semiconductor laser) emits the light beam which strikes the mirror/retro-reflector of the opposite spindle, from which it reflects back to the device and at rotation of the spindles its shift stipulates elevation, mutual axial shift of the spindles and mutual relative shift of the spindles.

From US6049378 is further known a device and method for mutually aligning bodies - i.e. rollers or other mutually adjacent articles. The device comprises a light emitting system for emitting a light beam oriented parallel to a defined axis, an adaptor with which the light emitting system is mountable onto a body to be aligned parallel to a longitudinal axis thereof, a receiving unit for receiving said light beam and having means for determining its own orientation relative to a predetermined spatially fixed coordinate system, and electronic computing means for a determining azimuth and elevation angular positions of the adaptor and body with respect to said predetermined spatially fixed coordinate system by a) determining a specific angular alignment of the receiving unit relative to coordinates of the predetermined spatially fixed coordinate system b) determining a direction of reception of the light beam from the light emitting system relative to specific housing dimensions of the receiving unit c) computing of the angular position of the adaptor relative to the predetermined spatially fixed coordinate system on the basis of measured values which have been obtained by means of a) and b) without having to displace either of said receiving unit and said longitudinal axis.

US2003016367 discloses a device for quantitative assessment of the aligned position of two machine parts, workpieces or the like, which is used especially for purposes of axis or spindle alignment. A light beam is incident on an optoelectronic sensor which can be read out two-dimensionally and the impact point there is determined by the sensor. Part of the light beam is preferably reflected by the sensor directly onto a second optoelectronic sensor. The impact point of the reflected light beam there is determined in a feasible manner by the second sensor. The orientation of at least the first sensor relative the location of the light beam is determined from the signals of the two sensors.

US2005193806 further discloses a measurement device for determining the straightness of shafts or shaft tunnels. The measurement device comprises a first adapter configured for placement on a shaft or a cylindrical surface and which has a respective device for transmitting and for receiving and for detecting the location and the direction of incidence of at least one light beam of defined cross section, and a second adapter is configured for placement on the shaft or cylindrical surface and which has a respective device for transmitting and for receiving and for detecting the location and the direction of incidence of at least one light beam of defined cross section. The device further includes electronics operationally connected to the devices for receiving and detecting light beams, which is adapted for quantitatively determining both translational parallel offset and also angular offset of said adapters relative to one another according to two degrees of freedom for each type of offset. The device is designed for determining the straightness of shafts or shaft tunnels in segments and can also be used for measurement of oil pipelines.

From US6342946 is also known a system for determining the axial position of a hollow cylinder, said system comprising a laser head including a laser for emitting a beam of laser light in an axial direction which is not matched precisely to an axial direction of the hollow cylinder, and a rotary device for mounting said laser head within the hollow cylinder. The rotary device is adapted to cause said laser head to rotate along an inner surface of the hollow cylinder to thereby produce substantially circular projection patterns on a target attached at an area outside of the hollow cylinder. The projection pattern with its center defines a point on an ideal axis (core) which is assigned to the hollow cylinder. The invention is suitable especially for measuring shaft tunnels of ships, but also for laying piping systems with large dimensions such as pipelines.

The aim of the invention is to propose a method for determination of deflection or the process of deflection of a horizontal or angular spindle, particularly in machine tools, which would eliminate the disadvantages of the background art by the fact that it would be completely independent of the other parts of the particular machine tool, the results of the method would be distorted by additional load of the spindle only very little and especially by the fact that it could be used, e.g., on test benches even before the installation of the headstock.

## Principle of the invention

The goal of the invention is achieved by a method for determination of deflection or the process of deflection of a horizontal or angular spindle, especially of a horizontal or angular spindle of a machine tool, during extension of the spindle out of the headstock, whose principle consists in that a laser beam source is clamped to a spindle, and at least at two different optical distances from the spindle end with at least two different extensions of the spindle out of the headstock, points of incidence of the laser beam or of its components created by splitting the laser beam by a beam splitter, or geometric shapes drawn by the laser beam or by its components are recorded or continuously recorded. The deflection of the spindle is then determined, or the process of deflection of the spindle is continuously determined from the vertical components, or components oriented downwards, of the shift of the points of incidence of the laser beam or its components, or of the centers of the geometric shapes drawn by the laser beam or by its components at these optical distances, from the difference in these optical distances, from one of these optical distances from the spindle end and from the difference in the extension of the spindle out of the headstock.

According to an embodiment of a detection device, the points of incidence of the laser beam or the geometric shapes drawn by the laser beam are recorded, or continuously recorded, on the optical matrix of one electronic optical sensor arranged against the spindle end, which moves between at least two positions at different optical distances from the spindle end.

In an alternative variant of embodiment of a detection device, the points of incidence of the laser beam or the geometric shapes drawn by the laser beam are recorded, or continuously recorded on the optical matrices of two electronic optical sensors, which are arranged behind each other opposite the spindle end at different optical distances from it, whereby the electronic optical sensor arranged at a lesser optical distance from the spindle end moves at least temporarily off the path of the laser beam for the purpose of recording the point of incidence of the laser beam or the geometric shape drawn by the laser beam on the optical matrix of the electronic optical sensor arranged at a greater distance from the spindle end.

When using the detection device in another alternative embodiment, the laser beam is split into two components, whereby the points of incidence of these components or the geometric shapes drawn by these components are recorded, or continuously recorded, on the optical matrices of two electronic optical sensors, whereby each of these components strikes the optical matrix of the electronic optical sensor located at a different optical distance from the spindle end, or draws geometrical shapes on it.

So as to increase the accuracy of determination, it is advantageous if at least one component of the laser beam before striking the optical matrix of the electronic optical sensor is at least once reflected by an auxiliary mirror, by which means its trajectory is extended.

Furthermore, in all the variants it is advantageous if in order to eliminate possible inaccuracies of the mounting of the laser beam source in the axis of the spindle rotation, this spindle rotates at an appropriate speed when recording the points of incidence of the laser beam or its components or when recording the geometric shapes drawn by the laser beam or its components.

## Description of drawings

In the enclosed drawings, Fig. 1 schematically represents the principle of the method for determination of deflection or the process of deflection of a horizontal or angular spindle, especially a horizontal or angular spindle of a machine tool, and at the same time also the principle of the first variant of the detection device for performing this method, Fig. 2a shows the second alternative of the detection device for carrying out this method and its principle, Fig. 2b shows the third variant of this detection device and its principle, and Fig. 3 shows the principle of the method for determination and evaluation of deflection or the process of deflection of a horizontal or angular spindle, especially a horizontal or angular spindle of a machine tool in case the source of the laser beam is mounted off the axis of the spindle rotation.

## Specific description

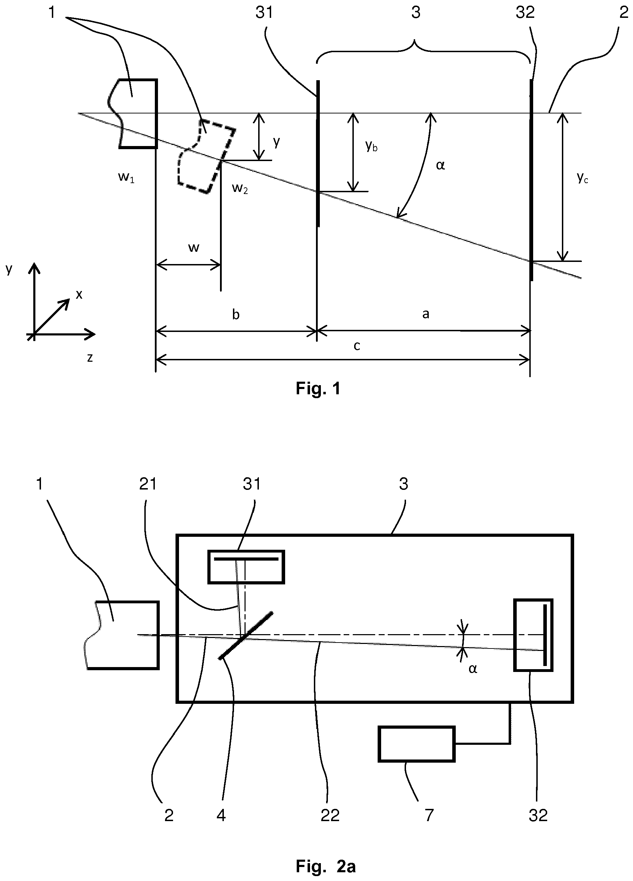

The method for determination of deflection or the process of deflection of a horizontal or angular spindle, especially a horizontal or angular spindle of a machine tool according to the invention will be explained on an example of a horizontal spindle of a machine tool with regard to Figs. 1 to 3, whereby in the case of an angular spindle the method is analogical, as is obvious to a person skilled in the art.

For determination of deflection $y$ or the process of deflection of a horizontal or angular spindle $1$, especially a horizontal or angular spindle $1$ of a machine tool by the method according to the invention (see Fig. 1) an unillustrated source of a laser beam $2$ (e.g. laser diode) is clamped to a particular spindle $1$ in the axis of its rotation and opposite the laser beam source is located at a predetermined distance on the axis of rotation of the spindle $1$ a detection device $3$ (see Fig. 1 to Fig. 2b), which contains at least two electronic optical sensors $31$ and $32$ located with their optical matrices in the path of the laser beam $2$. On the other hand, the optical distance $a$ between the optical matrices of the electronic optical sensors $31$, $32$, the optical distances $b$ and $c$ between the end of the spindle $1$ and the optical matrices of the individual electronic optical sensors $31$, $32$ are known. Under the term "optical distance" we understand the total length of the trajectory of the laser beam $2$ (and/or of its components) between the two elements.

In another variant of determination of deflection $y$ or the process of deflection of a horizontal or angular spindle $1$, especially a horizontal or angular spindle $1$ of a machine tool according to the invention, the detection device is located opposite the source of the laser beam $2$ at a predetermined distance on the axis of rotation of the spindle $1$, whereby the detection device $3$ contains one electronic optical sensor $31$, which is mounted on a precise guide adjustably with its optical matrix between at least two positions, whereby its shifting between these positions is manual, or the electronic optical sensor $31$ is coupled to a drive for this shifting movement. At the moment when a need arises for incidence of the laser beam $2$ on the optical matrix arranged at a different optical distance from the end of the spindle $1$, the electronic optical sensor $31$ moves along its guide in a required manner at least once towards the end of the spindle $1$ or away from it. The optical distance $a$ is then determined by the distance by which the sensor $31$, or, more specifically, its optical matrix has moved, the optical distance $b$ is determined by, e.g., the smallest optical distance (or any other optical distance) of the optical matrix of the electronic optical sensor $31$ from the end of the spindle $1$ and the optical distance $c$ is determined, e.g., by the greatest optical distance (or any other optical distance, other than the optical distance $b$) of the optical matrix of the electronic optical sensor $31$ from the end of the spindle $1$, at which the point of incidence of the laser beam $2$ was recorded.

The value of the deflection $y$ of the spindle $1$ during its extension $w$ or the process of deflection of the spindle $1$ of a horizontal or angular spindle $1$ when being extended (and/or inserted) is then determined, as will be described below, on the basis of the shifts of the points (pixels) of incidence of the laser beam $2$ or its components on the optical matrices of the electronic optical sensors $31$, $32$, or on the basis of the shift of the points (pixels) of incidence of the laser beam $2$ on the optical matrix of the electronic optical sensor $31$ at two different optical distances $b$ and $c$ from the end of the spindle $1$. To determine this shift, it is possible to use one of succeeding variants of the detection device $3$. Owing to the fact that for determination of both the deflection $y$ and the inclination angle $\alpha$ of the spindle $1$ in the case of a horizontal spindle $1$ it is only the vertical component of the total deviation of the spindle $1$ off its original (theoretical) axis that is relevant, the following description is based on monitoring only this component (i.e. the vertical component in the direction of axis y according to Fig. 1). However, in case of need, analogical algorithm and calculation can be used also for determining the horizontal component of the total deviation of the spindle $1$ off its original (theoretical) axis (i.e. according to Fig. 1 the component in the direction of the horizontal axis x). In the case of an angular spindle $1$ it is the component oriented downwards of its deviation in the axis perpendicular to the axis of the spindle $1$ rotation that is determined.

In the first variant of embodiment, the detection device $3$ (Fig. 1) contains two electronic optical sensors $31$ and $32$, whose optical matrices are arranged behind each other at the optical distance $a$ in the path of the laser beam $2$, whereby the electronic optical sensor $31$, which is arranged at a lesser optical distance $b$ from the end of the spindle $1$, is mounted tiltably and/or rotatably and/or shiftably, or otherwise movably, and is coupled to an unillustrated drive or a device for this movement. As soon as a need arises for incidence of the laser beam **2** on the optical matrix of the electronic optical sensor **32**, which is arranged behind it at a greater optical distance **c** from the end of the spindle **1**, the electronic optical sensor **31** is thus removed from the path of the laser beam **2**, or, conversely, when a need arises for incidence of the laser beam **2** on its optical matrix, it shifts to the path of this beam **2**. Preferably, the mounting and drive of the electronic optical sensor **31** also enable its shifting back to the initial position for further recording.

In the second variant of embodiment, the detection device **3** (Fig. 2a) contains a beam splitter **4** (e.g. a semipermeable mirror, etc.), which is arranged in the path of the laser beam **2**, and two electronic optical sensors **31**, **32**, each of which is arranged with its optical matrix behind the beam splitter **4** in the path of one component **21**, **22** of the laser beam **2**. The beam splitter **4** then splits the laser beam **2**, which strikes it, into two components, whereby the component **21** reflected by the beam splitter **4** strikes the optical matrix of the electronic optical sensor **31** arranged off the axis of the rotation of the spindle **1** (in the illustrated variant of embodiment, the electronic optical sensor **31** is situated at a lesser optical distance from the end of the spindle **1**), whereas the through-component **22** passing through the beam splitter **4** strikes the optical matrix of the electronic optical sensor **32** arranged on the axis of the spindle **1** rotation or in its vicinity (in the illustrated variant of embodiment, the electronic optical sensor **32** is situated at a greater optical distance from the end of the spindle **1**). The optical distance **a** of the optical matrices of the electronic optical sensors **31**, **32** is in this case determined as a difference of their optical distances from the beam splitter **4**. The optical distances **b** and **c** of the respective optical matrix of the electronic optical sensor **31**, or **32**, are then determined as a sum of the optical distances of the end of the spindle **1** from the beam splitter **4** and the optical distance of the beam splitter **4** from the optical matrix of the respective electronic optical sensor **31**, or **32**.

In an unillustrated variant of embodiment of the detection device **3** which is based on the variant shown in Fig. 2a, the optical distance of the optical matrix of the electronic optical sensor **31**, which senses the reflected component **21** of the laser beam **2** from the beam splitter **4** can be greater than the optical distance of the optical matrix of the electronic optical sensor **32**, which senses the through-component **22** of the laser beam **2** from the beam splitter **4**. As a result, in the above-mentioned calculation, the mathematical sign of their optical distance **a** changes.

In another unillustrated variant of embodiment, the through-component **22** passing through the beam splitter **4** is deviated off the axis of the spindle **1** rotation and, consequently, also the respective electronic optical sensor **32** is mounted off this axis.

The detection device **3** in the above-mentioned variants may be further modified by adding at least one unillustrated auxiliary mirror, which extends the length of the trajectory of the reflected component **21** and/or of the through-component **22** of the laser beam **2**, or of the laser beam **2** itself, thereby also extending the optical distance of the optical matrix of the respective electronic optical sensor **31** and/or **32** from the end of the spindle **1**, as well as the optical distance a between the optical matrices of the electronic optical sensors **31** and **32**. This enables size reduction of the detection device **3** while maintaining or even increasing the required accuracy of determination of the deflection **y** or the process of deflection and/or determination of the inclination angle $\alpha$ and/or the process of bending of a horizontal or angular spindle **1**. Optionally, the optical distance of the optical matrix of the electronic optical sensor **31**, which senses the reflected component **21** of the laser beam **2**, from the beam splitter **4** can be greater than the optical distance of the optical matrix of the electronic optical sensor **32**, which senses the through-component component **22** of the laser beam **2**, from this beam splitter **4**, and, consequently, also in this case mathematical sign of their optical distance **a** changes. In another variant of embodiment of the detection device **3**, both electronic optical sensors **31**, **32** may be arranged with their optical matrices off the axis of the rotation of the spindle **1**.

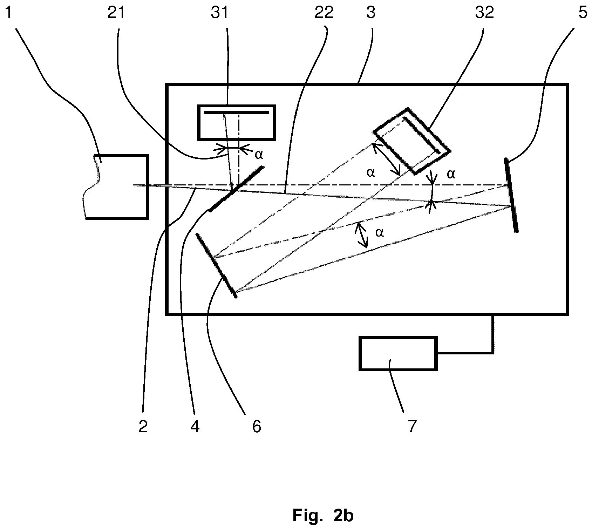

In an example of embodiment of the thus modified detection device **3** shown in Fig. 2b, the detection device **3** contains two auxiliary mirrors **5** and **6**, which extend the trajectory of the through-component **22** of the laser beam **2** before it strikes the optical matrix of the respective electronic optical sensor **32** arranged in the illustrated example of embodiment off the axis of the rotation of the spindle **1**, thereby at the same time extending the optical distance **a** between the optical matrices of the electronic optical sensors **31**, **32**, which is in this case determined by the difference in the optical distances of the optical matrices of the electronic optical sensors **31**, **32** from the beam splitter **4**. The optical distances **b** and **c** of the end of the spindle **1** from the optical matrix of the electronic optical sensor **31**, or **32**, is then determined as a sum of the optical distances of the end of the spindle **1** from the beam splitter **4** and the optical distance of the beam splitter **4** from the optical matrix of the respective electronic optical sensor **31**, or **32**.

The optical distance **a** of the optical matrices of the electronic optical sensors **31**, **32** and the optical distances **b** and **c** of the optical matrices of the electronic optical sensors **31** and **32** from the end of the spindle **1** are in these variants different (greater), than their physical distances.

In an unillustrated variant of embodiment of the detection device **3**, this device contains only one electronic optical sensor **31**. The electronic optical sensor **31** is mounted on a precise guide adjustably with its optical matrix between at least two positions in the path of the laser beam **2**, and in case of need it is coupled to a drive for this shift. As soon as a need arises for incidence of the laser beam **2** on the optical matrix arranged at a different optical distance from the end of the spindle **1**, the sensor **31** moves along its guide in a required manner at least once towards or away from the end of the spindle **1**. The optical distance **a** is then determined by the distance by which the sensor **31** or, more precisely, its optical matrix has shifted, the optical distance **b** is determined by, e.g., the smallest distance of the optical matrices of the electronic optical sensor **31** from the end of the spindle **1**, and the optical distance **c** is determined, e.g., by the greatest distance of the optical matrices of the electronic optical sensor **31** from the end of the spindle **1**, at which the point of incidence of the laser beam **2** was recorded.

In all the alternative embodiments described above, the detection device **3** is provided with an evaluating unit **7** to which its electronic optical sensors **31**, **32** are connected. The evaluating unit **7** can be either single-purpose, or it can be composed of, e.g., a (portable) computer or another similar apparatus.

At least the optical elements of the detection device **3**, i.e. the electronic optical sensors **31**, **32**, or the beam splitter **4** and the auxiliary mirrors **5**, **6**, are for protection from undesired pollution mounted in an unillustrated case provided with an inlet of the laser beam **2**.

The detection device **3** in the alternatives illustrated in Figs. 2a and 2b and in other above-mentioned alternatives with the beam splitter **4** enable, counter to the variant shown in Fig. 1, continuous monitoring of the points of incidence of the laser beam **2** or its components **21**, **22**, or the geometric shapes drawn the laser beam or by its components **21**, **22**.

When using the detection device **3** in the variant shown in Fig. 1, an unillustrated source of a laser beam **2** (e.g. a laser diode, etc.) is clamped in the spindle **1** of a machine tool in the axis of its rotation and successively are recorded the points (pixels) of incidence of the laser beam **2** on the optical matrices of both electronic optical sensors **31**, **32** of the detection device **3**, or, the points of incidence of the laser beam **2** on the optical matrix of one electronic sensor **31** at two different optical distances **b** and **c** from the end of the spindle **1**, during two different predetermined extensions $w_1$, $w_2$ of the spindle **1** out of the headstock (one of which may be, e.g., zero extension, or, in other words, complete insertion of the spindle **1** in the headstock and the other, e.g., maximum extension of the spindle **1** out of the headstock). The value of deflection **y** of the spindle **1** is determined from the vertical component of the shift $y_b$ and $y_c$ of these points on the optical matrices of both electronic optical sensors **31**, **32**, or, on the optical matrix of one electronic optical sensor **31** at optical distances **b** and **c** from the end of the spindle **1**, in the following manner:

$$y = y_b - \frac{(b-w)(y_c - y_b)}{a},$$

and the angle $\alpha$ of the inclination of the axis of rotation of the spindle **1**, e.g. is determined as follows:

$$\alpha = \operatorname{arctg}\left(\frac{y_c - y_b}{a}\right),$$

where:

$y_b$ is a vertical component, or a component oriented downwards, of the shift of the point of incidence of the laser beam **2** on the optical matrix of the electronic optical sensor **31** at the optical distance **b** from the end of the spindle **1**,

**w** is a difference in the extension $w_1$ and $w_2$ of the spindle **1** at which the points of incidence of the laser beam **2** on the optical matrices of the electronic optical sensors **31**, **32**, or of the electronic optical sensor **31**, are recorded,

$y_c$ is a vertical component, or a component oriented downwards, of the shift of the point of incidence of the laser beam **2** on the optical matrix of the electronic optical sensor **32** or **31** (in the case of using only one electronic optical sensor **31**) at the optical distance **c** from the end of the spindle **1**,

and **a** is the optical distance of the optical matrices of the electronic optical sensors **31** and **32** or the shift of the optical matrix of one electronic optical sensor **31**, which equals the difference **c** - **b**.

The same calculation is then used also in other variants of the method for determination of deflection **y** or the process of deflection or the inclination angle $\alpha$ or the process of bending of the axis of the spindle **1**, regardless of the order in which are determined the points of incidence of the laser beam **2** on the optical matrices of the individual electronic optical sensors **31** or **32**, or on the optical matrix of one electronic optical sensor **31** at two different distances **b** and **c** from the end of the spindle **1**.

If needed, also the points of incidence of the laser beam **2** on the optical matrices of the electronic optical sensors **31**, **32** or the optical matrix of one electronic optical sensor **31** may be at least once recorded at two different optical distances **b** and **c** from the end of the spindle **1**, between two different predetermined extensions $w_1$, $w_2$ of the spindle **1** out of the headstock, which allows to obtain an idea about the process of deflection or the process of bending of the axis of the spindle **1** in question during its movement between these extensions $w_1$, $w_2$ of the spindle **1**. Furthermore, this process may be, for example, approximated on the basis of the extensions of the spindle obtained, by using a suitable mathematical model.

When using the detection device **3** in the alternatives shown in Fig. 2a or 2b, when the reflected component **21** of the laser beam **2** continuously strikes the optical matrix of the electronic optical sensor **31** and its through-component **22** continuously strikes the optical matrix of the electronic optical sensor **32**, with no need of adjustment of the electronic optical sensor **31** at a lesser optical distance **b** from the end of the spindle **1**, the process of recording the points of incidence of the components **21**, **22** of the laser beam **2**, or the process of monitoring their shifts, may take place continuously. The obtained vertical components $y_b$ and $y_c$ of the shifts of the individual components **21**, **22** of the laser beam **2** on the optical matrices of the individual electronic optical sensors **31**, **32** are then used for (continuous) calculation of the current value of deflection **y** of the spindle **1** or for (continuous) calculation of the inclination angle $\alpha$ of the axis of the spindle **1** in the manner described above.

The values of deflection **y** or the process of deflection of the spindle **1**, or the angle $\alpha$ of inclination of the axis of the spindle **1** or the process of bending of the axis of the spindle **1** are preferably determined in real time or nearly real time in the evaluating unit **7**, or they are also stored in its memory or in the memory aligned with it, or they are displayed on the evaluating unit **7** or on a display aligned with it, e.g. in a numeric form and/or in a graphic form.

So as to improve the accuracy of determination, especially to eliminate possible inaccurate mounting of the source of the laser beam **2** off the axis of the rotation of the spindle **1** it is advantageous if during determination of the deflection **y** or the process of deflection or determination of the inclination angle $\alpha$ or the process of bending of the axis of the spindle **1**, the spindle **1** rotates at a speed which from the point of evaluation does not reduce the quality of the images captured by the electronic optical sensor/sensors **31**, **32** and does not cause excessive machine vibrations. According to the type of electronic optical sensors **31**, **32** used as well as according to the type of the machine, the speed may range from units to thousands of revolutions per minute.

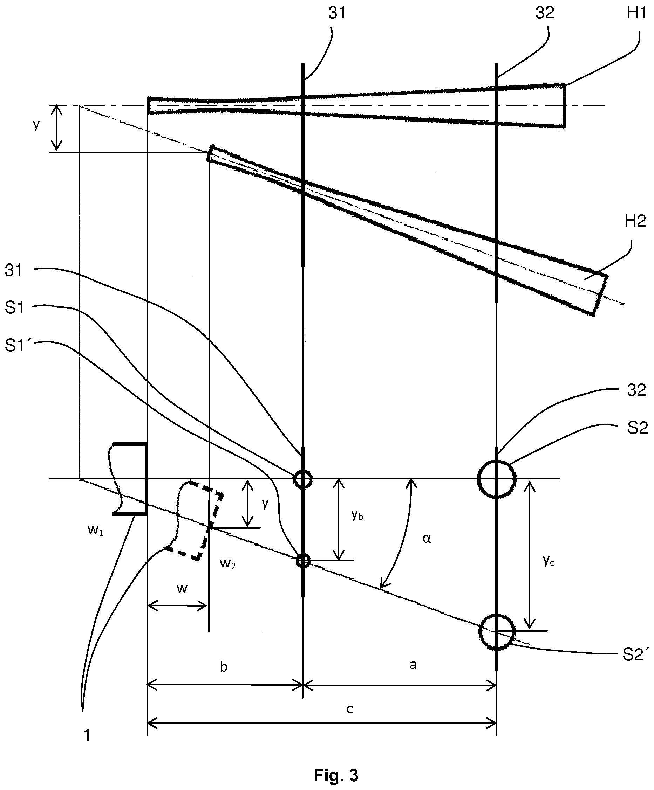

If the source of the laser beam **2** is mounted off the axis of the spindle **1** with a specific slight inaccuracy (Fig. 3), the laser beam **2** is generally skew relative to the axis of the spindle **1** rotation and during the rotation of the spindle **1** it creates a surface of lateral surface of one-sheeted rotational hyperboloid **H**. The optical matrices of the individual electronic optical sensors **31**, **32**, or one electronic optical sensor **31** at two different optical distances **b** and **c** from the end of the spindle **1**, then record the cross-sections **S1**, **S1'** and **S2**, **S2'** of hyperboloid **H1** and **H2** created during different extension $w_1$, $w_2$ of the spindle **1**, which have a shape of a circle if the plane of the optical matrix of the optical sensors **31**, **32**, or the electronic sensor **31** is perpendicular to the axis of hyperboloid **H1** (i.e., e.g., before the extension of the spindle **1**), whereas in the case of a change of the angle between the area of the optical matrix and the axis of hyperboloid **H2** (for example, due to the deflection of the spindle **1**) they acquire the shape of an ellipsis. The centers of these cross-sections **S1**, **S1'** and **S2**, **S2'** determine the rotation axis of the laser beam **2** source and thus also the real rotation axis of the end of the spindle **1** of a machine tool, which is identical with it, whereby the value of the deflection **y** of the spindle **1** or the angle $\alpha$ of inclination of its axis is determined by the method described above from the vertical components, or from the components oriented downwards, $y_b$ and $y_c$ of the shifts of the centers of these cross-sections.

The error which arises due to the fact that the centers of the ellipses which are cross-sections **S1** to **S2'** of hyperboloid **H1** or **H2** drawn by the laser beam **2**, are not geometrically identical with the intersection of the axis of hyperboloid **H1**, **H2**, is nevertheless totally negligible (under conditions usual for existing machine tools it does not exceed 0.1 $\mu$m). However, if necessary, it is possible to approximate it by using an appropriate mathematical algorithm and use it to correct the calculation.

Substantially any known area optical sensors can be used as electronic optical sensors **31**, **32**, and in a simple embodiment of the detection device **3** also linear optical sensors - e.g. a CCD or CMOS sensor, which may be in this case preferably black and white. Also, it is advantageous to use cameras which allow controlled scanning of a large number of images and thus more accurate results of determination of deflection **y** or the process of deflection or determination of the angle $\alpha$ of inclination of the axis or the process of bending of the axis of the spindle **1**, since during the rotation of the spindle **1** they enable to record a number of images of the incident laser beam **2**. For the evaluation of these images, known methods and programs from theory of image processing, which are easily available, can be used. Optionally, a series of images may also provide other information about the behavior of the spindle **1**, when, e.g., the individual scanned irradiated points (pixels) of the optical matrices of the electronic optical sensors **31**, **32**, or the optical matrix of one electronic optical sensor **31** at two different distances from the end of the spindle **1**, is aligned with an angular position of the spindle **1** in a form of an impulse from an unillustrated sensing element of the angular rotation of the spindle **1** (which belongs to standard equipment of machine tools), which enables especially to carry out the statistical processing of the results from a large number of revolutions, to detect errors of the rotary motion of the spindle **1**, etc.

For solving specific tasks or for modelling specific situations, the clamping cone of the spindle **1** may be adapted for weight to be attached to it or for another member for loading the spindle **1**.

The method for determination of the deflection **y** or the process of deflection of a horizontal or angular spindle **1**, especially a horizontal or angular spindle of a machine tool, according to the invention is applicable substantially in all machines or devices with a horizontal or angular rotary spindle **1**, whereby it is used preferably especially in machine tools, e.g. boring and milling machines.

Moreover, the detection device **3** described above, apart from the methods described above, may be used without any modification for determination of a linear deviation/linear deviations and/or an angular deviation/angular deviations (e.g. complying with CSN ISO 230-1) of the path and/or a plane of the workpiece and/or a part of the machine (e.g. the clamping table, support, tailstock, etc.), especially of a machine tool, from the rotation axis or a point on the axis of rotation of the (fixed or telescopic) spindle **1** in two mutually perpendicular axes, which are at the same time perpendicular to the axis of the rotation of the spindle **1**. During the process of determination, the spindle **1** remains for the whole time in a fixed position (e.g. inserted in the headstock), and the detection device **3** according to any of the alternatives described above, or its electronic optical sensor/sensors **31**, **32** moves/move in relation to it (towards it and/or away from it) in the path and/or the plane of the workpiece and/or the machine part, whose linear deviation/deviations and/or angular deviation/deviations from the rotation axis or a point on the axis of the spindle **1** rotation are determined or continuously determined.

**Claims**

1. A method for determination of deflection y or the process of deflection of a horizontal or angular spindle (1), especially of a horizontal or angular spindle (1) of a machine tool, during extension of the spindle out of a headstock whereby a source of a laser beam (2) is clamped to a spindle (1) and the points of incidence of the laser beam or the geometric shapes drawn by the laser beam are recorded, or continuously recorded, at least at two different optical distances b and c from the end of the spindle (1) for each one of at least two different extensions $w_1$ and $w_2$ of the spindle (1) out of the headstock, whereby the deflection y of the spindle (1) is determined, or the process of deflection of the spindle (1) is determined, from the downwards oriented components of the shifts $y_b$ and $y_c$ of the points of incidence of the laser beam (2) or of the centers of the geometric shapes drawn by the laser beam (2) at the optical distances b and c from the end of the spindle (1), from the difference a of said optical distances b and c, from one of said optical distances b or c from the end of the spindle (1), and from the difference w between the extensions $w_1$ and $w_2$ of the spindle (1) out of the headstock, the deflection y of the spindle (1) in its movement is determined or is continuously determined as:

$$y = y_b - \frac{(b-w)(y_c - y_b)}{a},$$

2. The method according to claim 1, **characterized in that** the points of incidence of the laser beam (2) or the geometric shapes drawn by the laser beam (2) are recorded, or continuously recorded, on the optical matrix of one electronic optical sensor (31) arranged opposite the end of the spindle (1), which moves between at least two positions at the optical distances (b) and (c) from the end of the spindle (1).

3. The method according to claim 1, **characterized in that** the points of incidence of the laser beam (2) or the geometric shapes drawn by the laser beam (2) are recorded, or continuously recorded, successively on the optical matrices of two electronic optical sensors (31), (32) arranged behind each other opposite the end of the spindle (1) at the optical distances b and c from the end of the spindle (1), whereby the electronic optical sensor (31), arranged at a lesser optical distance b from the end of the spindle (1) moves at least temporarily off the path of the laser beam (2) for recording the point of incidence of the laser beam (2) or the geometric shape drawn by the laser beam (2) on the optical matrix of the optical sensor (32) arranged at a greater optical distance c from the end of the spindle (1).

4. The method according to any of the preceding claims, **characterized in that** the spindle (1) together with the source of the laser beam (2) rotate during the recording of the points of the incident laser beam (2) or the geometric shapes drawn by the laser beam (2).

5. A method for determination of deflection y or the process of deflection of a horizontal or angular spindle (1), especially of a horizontal or angular spindle (1) of a machine tool, during extension of the spindle out of a headstock whereby a source of a laser beam (2) is clamped to a spindle (1), the laser beam (2) emitted by the source is split by a beam splitter (4) into two components (21), (22) and the points of incidence of the components of the laser beam or the geometric shapes drawn by the components of the laser beam are recorded, or continuously recorded, at least at two different optical distances b and c from the end of the spindle (1) for each of at least two different extensions $w_1$ and $w_2$ of the spindle (1) out of the headstock, whereby the deflection y of the spindle (1) is determined, or the process of deflection of the spindle (1) is determined, from the downwards oriented components of the shifts $y_b$ and $y_c$ of the points of incidence of the components (21), (22) of the laser beam (2) or of the centers of the geometric shapes drawn by the components (21), (22) of the laser beam (2) at the optical distances b and c from the end of the spindle (1), from the difference a of said optical distances b and c from one of said optical distances b or c from the end of the spindle (1), and from the difference w between the extension $w_1$ and $w_2$ of the spindle (1) out of the headstock, the deflection y of the spindle (1) in its movement is determined or is continuously determined as:

$$y = y_b - \frac{(b-w)(y_c - y_b)}{a},$$

6. The method according to claim 5, **characterized in that** the points of incidence of the components (21), (22) of the laser beam (2) or the geometric shapes drawn by the components (21), (22) of the laser beam are recorded, or continuously recorded on the optical matrices of two electronic optical sensors (31), (32), whereby each of the components (21), (22) of the laser beam (2) strikes the optical matrix of the electronic optical sensor (31), (32) located at a different optical distance b and c from the end of the spindle (1) or it draws a geometric shape on it.

7. The method according to claim 6, **characterized in that** at least one component (21), (22) of the laser beam (2) is at least once reflected by an auxiliary mirror (5) before striking the optical matrix of the electronic optical sensor (31), (32).

8. The method according to any of the claims 5 to 7, **characterized in that** the spindle (1) together with the source of the laser beam (2) rotates during the recording of the points of incidence of the components (21), (22) of the laser beam (2) or the geometric shapes drawn by the components (21), (22) of the laser beam (2).

**Patentansprüche**

1. Verfahren zur Festlegung einer Herabhängung y oder eines Verlaufes einer Herabhängung einer horizontalen oder schrägen Spindel (1), insbesondere einer horizontalen oder schrägen Spindel (1) einer Bearbeitungsmaschine, während einer Hinausschiebung einer Spindel aus einem Spindelstock, wobei in die Spindel (1) eine Quelle eines Laserstrahls (2) aufgenommen wird und in mindestens zwei unterschiedlichen optischen Abständen b und c vom Ende der Spindel (1) für jede der mindestens zwei unterschiedlichen Hinausschiebungen $w_1$ und $w_2$ der Spindel (1) aus einem Spindelstock die Stellen eines Einfalls eines Laserstrahles oder die durch einen Laserstrahl beschriebenen geometrischen Formen aufgenommen bzw. durchlaufend aufgenommen werden, wobei eine Herabhängung y einer Spindel (1) oder ein Verlauf einer Herabhängung einer Spindel (1) aus den nach unten orientierten Komponenten einer Verschiebung $y_b$ und $y_c$ der Stellen eines Einfalls eines Laserstrahls (2) oder den Mitten der durch einen Laserstrahl (2) beschriebenen geometrischen Formen in den optischen Abständen b und c vom Ende einer Spindel (1), aus einem Unterschied a dieser optischen Abstände b und c, aus einem dieser optischen Abstände b oder c vom Ende einer Spindel (1), und einem Unterschied w zwischen Hinausschiebungen $w_1$ und $w_2$ einer Spindel (1) aus einem Spindelstock festgelegt werden, wobei eine Herabhängung y einer Spindel (1) während ihrer Bewegung wie folgt festgelegt oder durchlaufend festgelegt wird:

$$y = y_b - \frac{(b-w)(y_c - y_b)}{a}.$$

2. Verfahren nach dem Anspruch 1, **dadurch gekennzeichnet, dass** die Stellen eines Einfalls eines Laserstrahls (2) oder die durch einen Laserstrahl (2) beschriebenen geometrischen Formen auf einer optischen Matrix von einem elektronischen optischen Sensor (31) aufgenommen, bzw. durchlaufend aufgenommen werden, der gegen das Ende einer Spindel (1) angeordnet ist, die sich zwischen mindestens zwei Lagen in den optischen Abständen (b) und (c) vom Ende einer Spindel (1) bewegt.

3. Verfahren nach dem Anspruch 1, **dadurch gekennzeichnet, dass** die Stellen eines Einfalls eines Laserstrahls (2) oder die durch einen Laserstrahl (2) beschriebenen geometrischen Formen auf optischen Matrizen von zwei elektronischen optischen Sensoren (31) aufgenommen, bzw. durchlaufend aufgenommen werden, die gegen das Ende einer Spindel (1) in den optischen Abständen b und c vom Ende einer Spindel (1) hintereinander angeordnet sind, wobei der elektronische optische Sensor (31), der in einem kleineren optischen Abstand b vom Ende einer Spindel (1) angeordnet ist, zur Aufnahme der Stelle eines Einfalls eines Laserstrahls (2) oder einer durch einen Laserstrahl (2) beschriebenen geometrischen Form auf einer optischen Matrix eines optischen Sensors (32), der in einem größeren optischen Abstand c vom Ende einer Spindel (1) angeordnet ist, mindestens vorübergehend außerhalb der Bahn eines Laserstrahls (2) verschoben wird.

4. Verfahren nach einem der vorangehenden Ansprüche, **dadurch gekennzeichnet, dass** sich die Spindel (1) zusammen mit einer Quelle eines Laserstrahls (2) bei der Aufnahme der Stellen eines Einfalls eines Laserstrahls (2) oder der durch einen Laserstrahl (2) beschriebenen geometrischen Formen dreht.

5. Verfahren zur Festlegung einer Herabhängung y oder eines Verlaufs einer Herabhängung einer horizontalen oder schrägen Spindel (1), insbesondere einer horizontalen oder schrägen Spindel (1) einer Bearbeitungsmaschine, während einer Hinausschiebung einer Spindel aus einem Spindelstock, wobei in die Spindel (1) eine Quelle eines Laserstrahls (2) aufgenommen wird, der durch diese Quelle emittierte Laserstrahl (2) durch einen Teiler (4) eines Strahls auf zwei Komponenten (21), (22) geteilt wird und in mindestens zwei unterschiedlichen optischen Abständen b und c vom Ende einer Spindel (1) für jede der mindestens zwei unterschiedlichen Hinausschiebungen $w_1$ und $w_2$ einer Spindel (1) aus einem Spindelstock die Stellen eines Einfalls der Komponenten eines Laserstrahls oder die durch einen Laserstrahl beschriebenen geometrischen Formen aufgenommen, bzw.

durchlaufend aufgenommen werden, wobei eine Herabhängung y einer Spindel (1) oder ein Verlauf einer Herabhängung einer Spindel (1) aus den nach unten orientierten Komponenten der Verschiebung $y_b$ und $y_c$ der Stellen eines Einfalls von Komponenten (21), (22) des Laserstrahls (2) oder den Mitten der durch die Komponenten (21), (22) eines Laserstrahls (2) beschriebenen geometrischen Formen in den optischen Abständen b und c vom Ende einer Spindel (1), aus einem Unterschied a dieser optischen Abstände b und c, aus einem dieser optischen Abstände b oder c vom Ende einer Spindel (1), und einem Unterschied w zwischen Hinausschiebungen $w_1$ und $w_2$ einer Spindel (1) aus einem Spindelstock festgelegt werden, wobei die Herabhängung y einer Spindel (1) während ihrer Bewegung wie folgt festgelegt oder durchlaufend festgelegt wird:

$$y = y_{\mathrm{b}} - \frac{(b - w)(y_c - y_b)}{a}.$$

6. Verfahren nach dem Anspruch 5, **dadurch gekennzeichnet, dass** die Stellen eines Einfalls der Komponenten (21), (22) eines Laserstrahls (2) oder die durch Komponenten (21), (22) eines Laserstrahls beschriebenen geometrischen Formen auf optischen Matrizen von zwei elektronischen optischen Sensoren (31), (32) aufgenommen, bzw. durchlaufend aufgenommen werden, wobei jede Komponente (21), (22) eines Laserstrahls (2) auf eine optische Matrix einfällt oder eine geometrische Form auf einer optischen Matrix eines elektronischen optischen Sensors (31), (32) beschreibt, der in einem unterschiedlichen optischen Abstand b und c vom Ende einer Spindel (1) angeordnet ist.

7. Verfahren nach dem Anspruch 6, **dadurch gekennzeichnet, dass** mindestens eine Komponente (21), (22) eines Laserstrahls (2) vor einem Einfall auf eine optische Matrix eines elektronischen optischen Sensors (31), (32) mindestens einmal durch einen Hilfsspiegel (5) reflektiert wird.

8. Verfahren nach einem der Ansprüche 5 bis 7, **dadurch gekennzeichnet, dass** sich die Spindel (1) zusammen mit einer Quelle eines Laserstrahls (2) bei der Aufnahme der Stellen eines Einfalls von Komponenten (21), (22) eines Laserstrahls (2) oder der durch die Komponenten (21), (22) eines Laserstrahls (2) beschriebenen geometrischen Formen dreht.

## Revendications

1. Procédé de détermination de l'inclinaison y ou de la trajectoire de l'inclinaison d'une broche horizontale ou inclinée (1), notamment d'une broche horizontale ou inclinée (1) d'une machine-outil, lors de la sortie de la broche de la poupée, tandis que dans la broche (1) est fixée la source du rayon laser (2) et, dans au moins deux distances optiques différentes b et c depuis l'extrémité de la broche (1) sont enregistrées, pour au moins chacune des deux sorties différentes $w_1$ et $w_2$ de la broche (1) de la poupée, enregistrés de manière continue les points de réception du rayon laser ou des formes géométriques dessinées par le rayon laser, tandis que l'inclinaison y de la broche (1) ou la trajectoire de l'inclinaison de la broche (1) sont déterminées à partir d'éléments de déplacement $y_b$ et $y_c$ orientés vers le bas des points de réception du rayon laser (2) ou des centres des formes géométriques dessinées par le rayon laser (2) dans les distances optiques b et c depuis l'extrémité de la broche (1), à partir de la différence a de ces distances optiques b et c, à partir de l'une de ces distances optiques b ou c de l'extrémité de la broche (1), à partir de la différence w entre les sorties $w_1$ et $w_2$ de la broche (1) de la poupée, tandis que l'inclinaison y de la broche (1) lors de son mouvement est déterminée, ou bien déterminée de manière continue, comme suit :

$$y = y_{\mathrm{b}} - \frac{(b - w)(y_c - y_b)}{a}.$$

2. Procédé selon la revendication 1, **caractérisé en ce que** les points de contact du rayon laser (2) ou les formes géométriques dessinées par le rayon laser (2) sont enregistrées sur la matrice optique d'un capteur optoélectronique (31) disposé à l'opposé de l'extrémité de la broche (1), qui se déplace entre au moins deux positions dans les distances optiques (b) et (c) depuis l'extrémité de la broche (1).

3. Procédé selon la revendication 1, **caractérisé en ce que** les points de contact du rayon laser (2) ou les formes géométriques dessinées par le rayon laser (2) sont enregistrées, ou bien enregistrées de manière continuelle, sur les matrices optiques des deux capteurs optoélectroniques (31), (32) rangés l'un après l'autre à l'opposé de l'extrémité de la broche (1) dans les distances optiques b et c depuis l'extrémité de la broche (1), tandis que le capteur optoélectronique (31) situé dans une distance optique b plus courte depuis l'extrémité de la broche (1) se déplace au moins temporairement en dehors de la trajectoire du rayon laser (2) pour effectuer l'enregistrement du point de contact du rayon laser (2) ou de la forme géométrique désignée par le rayon laser (2) sur la matrice optique du capteur optique (32) disposé dans une distance optique c plus importante depuis l'extrémité de la broche.

4. Procédé selon l'une des revendications précédentes, **caractérisé en ce que** la broche (1) tourne en même temps que la source du rayon laser (2) lors de l'enregistrement des points de contact du rayon laser (2) ou des formes géométriques dessinées par le rayon laser (2).

5. Procédé de détermination de l'inclinaison y ou de la trajectoire de l'inclinaison d'une broche horizontale ou inclinée (1), notamment d'une broche horizontale ou inclinée (1) d'une machine-outil, lors de la sortie de la broche de la poupée, tandis que dans la broche (1) est fixée la source du rayon laser (2), le rayon laser (2) émis par cette source est divisé par le diviseur (4) du rayon en deux éléments (21), (22) et pour au moins deux distances optiques différentes b et c depuis l'extrémité de la broche (1) sont enregistrés, ou bien enregistrés de manière continuelle, pour chacune d'au moins deux différentes sorties $w_1$ et $w_2$ de la broche (1) de la poupée, les points de contact des éléments du rayon laser ou les formes géométriques dessinées par le rayon laser, tandis que l'inclinaison y de la broche (1) ou la trajectoire de l'inclinaison de la broche (1) sont déterminées à partir d'éléments de déplacement $y_b$ et $y_c$ des points de contact des éléments (21), (22) du rayon laser (2) orientés vers le bas, ou de centres des formes géométriques dessinées par les éléments (21), (22) du rayon laser (2) dans les distances optiques b et c depuis l'extrémité de la broche (1), à partir de la différence a de ces distances optiques b et c, d'une de ces distances optiques b ou c depuis l'extrémité de la broche (1), et de la différence w entre les sorties $w_1$ et $w_2$ de la broche (1) de la poupée, tandis que l'inclinaison y de la broche (1) est déterminée, ou bien déterminée de manière continuelle, comme suit :

$$y = y_b - \frac{(b - w)(y_c - y_b)}{a}.$$

6. Procédé selon la revendication 5, **caractérisé en ce que** les points de contact des éléments (21), (22) du rayon laser (2) ou les formes géométriques dessinées par les éléments (21), (22) du rayon laser sont enregistrés, ou bien enregistrent sur les matrices optiques de deux capteurs optoélectroniques (31), (32), tandis que chaque élément (21), (22) du rayon laser (2) entre en contact avec la matrice optique ou dessine une forme géométrique sur la matrice optique du capteur optoélectronique (31), (32) disposé à une distance optique opposée b et c depuis l'extrémité de la broche (1).

7. Procédé selon la revendication 6, **caractérisé en ce que** au moins un élément (21), (22) du rayon laser (2) est reflété au moins une fois par un miroir auxiliaire (5) avant d'entrer en contact avec la matrice optique du capteur optoélectronique (31), (32).

8. Procédé selon l'une des revendications 5 à 7, **caractérisé en ce que** la broche (1) tourne avec la source du rayon laser (2) lors de l'enregistrement des points de contact des éléments (21), (22) du rayon laser (2) ou des formes géométriques dessinées par les éléments (21), (22) du rayon laser (2).

**Fig. 1**

**Fig. 2a**

**Fig. 2b**

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102322795
- DE 19907880
- US 6049378 A
- US 2003016367 A
- US 2005193806 A
- US 6342946 B